# EUROPÄISCHE PATENTSCHRIFT

(11) **EP 2 998 098 B1**
(45) Veröffentlichungstag und Bekanntmachung des Hinweises auf die Patenterteilung: **19.10.2016**
(21) Anmeldenummer: 14185783.9
(22) Anmeldetag: 22.09.2014
(51) Int. Cl.: B29C 51/08

(54) **Verfahren zum Herstellen und Befüllen einer Applikationsverpackung für ein flüssiges pharmazeutisches Produkt**
Method for making and filling an application packaging for a liquid pharmaceutical product
Procédé de fabrication et de remplissage d'un conditionnement d'application pour un produit pharmaceutique liquide

(43) Veröffentlichungstag der Anmeldung: 23.03.2016
(73) Patentinhaber: Klocke Verpackungs-Service GmbH, 76356 Weingarten (DE)
(72) Erfinder: Klocke, Hartmut, 76133 Karlsruhe (DE); Renner, Klaus, 76275 Ettlingen (DE)
(74) Vertreter: Kaiser, Magnus

(56) Entgegenhaltungen:
- EP-A1- 2 664 429
- WO-A1-2008/148176
- DE-U1-202006 004 323
- FR-A1- 2 560 521
- US-A- 3 396 062
- DATABASE WPI Week 200261 Thomson Scientific, London, GB; AN 2002-570062 XP002736890, -& JP 2002 179140 A (TOPPAN PRINTING CO LTD) 26. Juni 2002 (2002-06-26)

## Beschreibung

Die Erfindung betrifft ein Verfahren zum Herstellen und Befüllen einer Applikationsverpackung für ein flüssiges pharmazeutisches Produkt nach dem Oberbegriff des Patentanspruchs 1. Es handelt sich also um ein Thermoforming- oder Tiefziehverfahren unter Verwendung einer Tiefziehfolie aus Kunststoff. Dieses bringt eine Applikationsverpackung hervor, welche nach Art einer Blisterverpackung ausgestaltet ist, also mit einer durch eine Deckfolie abgedeckten, im Wesentlichen ebenen Rückseite und einer durch ein Tiefziehfolien-Formteil gebildeten, meist transparenten oder transluzenten Vorderseite.

Bei einem Verfahren der vorliegenden Art wird zunächst eine Tiefziehfolie aus miteinander laminierten thermoplastischen Kunststoffen erwärmt, um die Tiefziehfolie zumindest in Teilbereichen zu plastifizieren. Nach dem Erwärmen wird die Tiefziehfolie über einem Formwerkzeug positioniert und die plastifizierte Tiefziehfolie in als Ausnehmungen im Formwerkzeug ausgebildete Tiefziehformen eingeformt, d.h. unter Anwendung von Vakuum und/oder Blasluft in diese hinein tiefgezogen. Hierbei wird in einem Verfahren der vorliegenden Art ein Formwerkzeug verwendet, mit dem sich durch das Tiefziehen der Tiefziehfolie ein Formteil mit einer Kammer für das flüssige pharmazeutische Produkt und einem in diese Kammer mündenden, kanülenartigen Applizierkanal ausformt. Die Kammer und der Applizierkanal sind rundum von einem nicht umgeformten, im Wesentlichen ebenen Verbindungsbereich der Tiefziehfolie umgeben.

In die solcherart zu einem Kunststoffformteil umgeformte Tiefziehfolie, deren Kammer und Applizierkanal zunächst noch nach oben offen sind, wird das flüssige pharmazeutische Produkt gefüllt, wobei dieses im Wesentlichen die Kammer und je nach Füllstand auch den Applizierkanal füllt.

Die tiefgezogene und befüllte Tiefziehfolie wird sodann mit einer im Wesentlichen ebenen Deckfolie abgedeckt, um die Kammer und den Applizierkanal zu verschließen und so ein pipettenartiges Gebilde in Form einer Blisterverpackung zu bilden. Durch Öffnen dieser Blisterverpackung im Bereich einer Spitze des Applizierkanals wird aus der Blisterverpackung eine Pipette zum Applizieren des darin enthaltenen pharmazeutischen Produkts, wodurch sich die Doppelfunktion der vorliegenden Applikationsverpackung ergibt: Sie fungiert einerseits als Verpackung des flüssigen pharmazeutischen Produkts und andererseits auch als Pipette zum Applizieren desselben.

Die Deckfolie wird zum Fertigstellen der Applikationsverpackung schließlich an dem die Kammer und den Applizierkanal umgebenden Verbindungsbereich der Tiefziehfolie festgelegt. Je nach dem pharmazeutischen Produkt, mit dem die Applikationsverpackung gefüllt werden soll, ist das Festlegen der Deckfolie an der Tiefziehfolie ein durchaus kritischer Verfahrensschritt, da die Verbindung flüssigkeits- und dampfdicht sowie in der Regel auch diffusionsdicht sein muss und hierbei auch das langfristige Kriechverhalten des flüssigen pharmazeutischen Produkts beachtet werden muss.

In der JP-A-2002179140 ist eine Applikationsverpackung für ein flüssiges pharmazeutisches Produkt offenbart, das mit einem voranstehend beschriebenen Verfahren hergestellt wird. Diese bekannte Applikationsverpackung besteht demnach aus einer zu einem Formteil umgeformten Tiefziehfolie, die mit einem flüssigen pharmazeutischen Produkt gefüllt und mit einer im Wesentlichen ebenen Deckfolie abgedeckt ist. Das Formteil umfasst eine Kammer und einen in diese mündenden, kanülenartigen Applizierkanal, die beide mit der Deckfolie abgedeckt sind. An der Spitze des Applizierkanals befindet sich eine Sollbruchstelle, um den Applizierkanal öffnen zu können, wodurch die Applikationsverpackung zu einer Pipette wird.

Das Hauptanwendungsgebiet einer Applikationsverpackung, die mit dem erfindungsgemäßen Verfahren hergestellt wird, ist das Vorhalten und Applizieren von pharmazeutischen Produkten, die gegen Parasiten bei Haustieren wirken, insbesondere gegen Flöhe und Zecken bei Hunden und Katzen. Solche veterinärmedizinische Antiparasitika enthalten als Wirkstoff oft Fipronil, das in Ethanol und/oder anderen organischen Lösungsmitteln gelöst in flüssiger Form direkt auf die Haut des Haustiers aufzubringen ist. Die Applikationsverpackung ist daher als Pipette mit besonders langem, kanülenartigen Entnahmekanal ausgebildet, um zu gewährleisten, dass der Wirkstoff auch durch das Fell eines langhaarigen Haustiers hindurch auf dessen Haut aufgebracht werden kann. Wirkstofflösung, die nicht bis zur Haut des Haustiers durchdringt, sondern von dessen Fell aufgenommen wird, kann die erwünschte Wirkung nicht entfalten.

Das Aufbringen eines flüssigen pharmazeutischen Wirkstoffs auf die Haut eines Hundes oder einer Katze ist allerdings mit besonderen Schwierigkeiten verbunden, da die Tiere in der Regel nicht stillhalten bzw. mitunter unerwartete Bewegungen ausführen, so dass die flüssige Wirkstofflösung allzu leicht nicht auf die Haut des Tieres gelangt, sondern verschüttet wird oder im Fell aufgenommen wird. Der kanülenartige Applizierkanal, d.h. der Pipettenschaft muss für diesen Anwendungsfall daher nicht nur besonders lang ausgebildet sein, sondern auch einen außergewöhnlich kleinen Querschnitt aufweisen, so dass die in der Kammer der Applikationsverpackung enthaltene Lösung nur dann aus dem an der Spitze geöffneten Applikationskanal austritt, wenn Druck auf die Kammer ausgeübt wird. Die Wirkstofflösung soll also nicht aus dem geöffneten Applizierkanal austreten, wenn kein Druck auf die Kammer ausgeübt wird, selbst wenn der Applizierkanal mit der Öffnung nach unten gehalten wird.

Eine weitere Problemstellung besteht schließlich darin, dass ein den Wirkstoff Fipronil enthaltendes Flüssigpräparat nicht mit jedem Kunststoff verträglich ist, sondern spezielle Tiefziehfolien und Deckfolien aus miteinander laminierten Kunststofffolien benötigt, welche eine Schicht aus einem Acrylnitril-Methylacrylat-Copolymer (AMAB), das unter der eingetragenen Marke Barex ® am Markt erhältlich ist, enthalten muss. Solche Folien sind zwar tiefziehbar und siegelbar, jedoch variiert die Foliendicke mitunter, insbesondere dann, wenn die Folie zum Tiefziehen plastifiziert und dann verformt wird.

Die für den vorliegenden Anwendungsfall erwünschte, besonders lange Form des Pipettenschafts, der durch den Applizierkanal der Applikationsverpackung gebildet wird, und der für das sichere Applizieren notwendige, geringe lichte Querschnitt des Applizierkanals, der ein unbeabsichtigtes Austreten der flüssigen Wirkstofflösung aus dem geöffneten Pipettenschaft verhindert, setzt jedoch eine exakte Maßhaltigkeit insbesondere der Tiefziehfolie im Bereich des Applizierkanals voraus. Denn Dickenschwankungen oder Wellungen in diesem Bereich beeinträchtigen den lichten Querschnitt des Applizierkanals und somit direkt die Dosierbarkeit der Wirkstofflösung bei der Anwendung: Ist der lichte Querschnitt an einer oder mehreren Stellen zu gering, ist es schwierig, die Wirkstofflösung aus der Kammer an diejenige Stelle des Haustiers aufzubringen, auf die der Wirkstoff dosiert werden soll. Wird der lichte Querschnitt des Applizierkanals aus Gründen der Toleranzen sicherheitshalber etwas größer gewählt, besteht die Gefahr, dass die Wirkstofflösung auch ohne Druck auf die Kammer aus dem geöffneten Applizierkanal austritt.

Der vorliegenden Erfindung liegt daher die Aufgabe zugrunde, ein Verfahren zum Herstellen und Befüllen einer Applikationsverpackung der eingangs genannten Art bereitzustellen, mit dem die Maßhaltigkeit des Applizierkanals der hergestellten Applikationsverpackung sowie insbesondere die Maßhaltigkeit von dessen lichten Querschnitt gewährleistet werden kann.

Gelöst ist diese Aufgabe durch ein Verfahren mit den Merkmalen des Patentanspruchs 1. Bevorzugte Ausgestaltungen des erfindungsgemäßen Verfahrens sind in den Patentansprüchen 2 bis 16 niedergelegt.

Gemäß der vorliegenden Erfindung wird die Tiefziehfolie beim Tiefziehen zumindest in einem Teilbereich des Applizierkanals mit einem Formstempel in das Formwerkzeug gepresst. "Beim Tiefziehen" bedeutet hier, dass durch den Formstempel ein Vorstrecken des Materials in das Formwerkzeug hinein erfolgen kann, was also vor dem eigentlichen Tiefziehvorgang stattfindet; zusätzlich oder alternativ kann der Formstempel auch gleichzeitig mit dem eigentlichen Tiefziehvorgang eingesetzt werden und diesen unterstützen. Die Tiefziehfolie wird mit einer solchen vorbereitenden und/oder begleitenden Einpressung mittels eines Formstempels besonders genau in Form gebracht und zwar erfindungsgemäß in einem Bereich, in dem es auf die Maßhaltigkeit besonders ankommt: dem kanülenartigen Applizierkanal. Insbesondere dann, wenn die Tiefziehfolie eine AMAB-Folie beinhaltet, macht sich dies gegenüber dem Stand der Technik besonders vorteilhaft bemerkbar.

Erfindungsgemäß ist die Tiefziehfolie beim Vorstrecken und/oder Tiefziehen mit Hilfe des erfindungsgemäßen Formstempels in einem solcherart thermisch plastifizierten Zustand, dass die Tiefziehfolie beim Einpressen bzw.

Vorstrecken zwischen dem Formstempel und dem Formwerkzeug kalibriert wird. Etwa vorhandene Dickenschwankungen im Folienmaterial werden durch einen solchen Kalibrierprozess ausgeglichen. Die Verwendung des Formstempels stellt so nicht nur sicher, dass der kanülenartige Applizierkanal an seiner Außenwand exakt der vom Formwerkzeug vorgegebenen Form entspricht, sondern auch eine besonders maßhaltige innere Oberfläche aufweist, die für die wichtige Maßhaltigkeit im lichten Querschnitt des Applizierkanals verantwortlich ist.

Die insbesondere bei AMAB-Folien und diese enthaltenden Laminaten auftretenden Dickenschwankungen führen bei Fipronil enthaltenden Wirkstofflösungen, die oft neben Ethanol auch weitere Lösungsmittel, wie Buthylhydroxyanisol und Buthylhydroxytoluol enthalten und eine besonders hohe Kriechfähigkeit besitzen, zu Problemen beim dichten Festlegen der Deckfolie an dem die Kammer und den Applizierkanal umgebenden Verbindungsbereich der Tiefziehfolie. Die kleinste Unregelmäßigkeit in der Verbindung zwischen der Deckfolie und der Tiefziehfolie kann dazu führen, dass bei einer längeren Lagerung der mit den genannten Wirkstofflösungen befüllten Applikationsverpackung die Wirkstofflösung austritt oder ausdiffundiert.

Es ist im Rahmen der vorliegenden Erfindung daher besonders bevorzugt, wenn die Deckfolie mittels einer thermischen Ringsiegelung mit dem Verbindungsbereich der tiefgezogenen und befüllten Tiefziehfolie stoffschlüssig verbunden wird. Eine solche thermische Ringsiegelung wird besonders bevorzugt mittels eines an sich plattenförmigen Siegelwerkzeugs vorgenommen, das im Verbindungsbereich auf die Deckfolie aufgesetzt wird, wobei jedoch nur ein beheizter Ringsteg, der über eine Auflageebene des Siegelwerkzeugs vorsteht, in direkten Kontakt mit der Deckfolie gelangt. Der beheizte Ringsteg führt zu einer hohen Flächenpressung an der Stelle, an der er die Deckfolie und die Tiefziehfolie zwischen sich und einer Gegenplatte verpresst. Da er beheizt ist, ergibt sich eine ringförmige, durch thermisches Siegeln hergestellte stoffschlüssige Verbindung zwischen der Deckfolie und der Tiefziehfolie. Diese ringförmige stoffschlüssige Verbindung umschließt die Kammer und den Applizierkanal der Applikationsverpackung, so dass diese im Ergebnis dicht und langzeitbeständig verschlossen ist. Dies ist insbesondere auch deswegen von großem Vorteil, weil die erfindungsgemäße Applikationsverpackung einen langen kanülenartigen Applizierkanal mit außergewöhnlich kleinem Querschnitt aufweist, so dass die in der Kammer der Applikationsverpackung enthaltene Lösung nur dann aus dem an der Spitze geöffneten Applikationskanal austritt, wenn Druck auf die Kammer ausgeübt wird. Die erfindungsgemäß bevorzugte thermische Ringsiegelung verhindert zuverlässig, dass bei einem Druck auf die Kammer, der je nach Anwendungsfall auch kräftig sein kann, kein Wirkstoff zwischen der Deckfolie und der Tiefziehfolie unbeabsichtigt austreten kann.

Für eine hochwertige Anmutung der Applikationsverpackung ist es allerdings auch notwendig, dass die Deckfolie nicht nur an der Ringsiegelung an der Tiefziehfolie haftet; vielmehr sollte die Deckfolie zumindest außerhalb der Ringsiegelung am gesamten Verbindungsbereich der Tiefziehfolie anhaften. Dies wird im Rahmen der vorliegenden Erfindung vorzugsweise dadurch erzielt, dass der beheizte Ringsteg nur geringfügig über die Auflageebene des plattenförmigen Siegelwerkzeugs übersteht und dieses auch neben bzw. außerhalb des Ringstegs beheizt ist, so dass beim Siegeln der Ringsiegelung nur ein geringer Abstand zwischen der Auflageebene des Siegelwerkzeugs und der Deckfolie verbleibt. Durch die Abstrahlwärme des plattenförmigen Siegelwerkzeugs wird die Deckfolie und/oder die Tiefziehfolie auch neben dem Ringsteg mit Strahlungswärme beaufschlagt, so dass die Tiefziehfolie und die Deckfolie im Wesentlichen im gesamten, außerhalb der Ringsiegelung liegenden Verbindungsbereich aneinander haften. Wenn die Applikationsverpackung aus der Tiefziehfolie in ihre endgültige Form ausgestanzt wird, kann es dann nicht vorkommen, dass sich die Deckfolie entlang des äußeren Randes der ausgestanzten Applikationsverpackung von der Tiefziehfolie löst und hierdurch - trotz der hiervon nicht beeinträchtigten Dichtigkeit der Ringsiegelung - einen minderwertigen Eindruck hinterlassen könnte.

Der Siegelvorgang erfolgt naturgemäß bei bereits gefüllter Kammer der herzustellenden Applikationsverpackung. Es ist im Rahmen der vorliegenden Erfindung daher bevorzugt, ein Siegelwerkzeug zu verwenden, das innerhalb des beheizten Ringstegs nicht beheizt ist bzw. mit einem thermisch isolierenden Material versehen ist, und zwar zumindest in einem Bereich, der bei der thermischen Ringsiegelung über der Kammer und dem Applizierkanal zu liegen kommt. Hierdurch wird vorteilhafterweise der Wärmeintrag in die Deckfolie oberhalb der Kammer und des Applizierkanals, und damit auch der Wärmeeintrag in das darin befindliche flüssige pharmazeutische Produkt verringert, so dass die Gefahr eliminiert ist, dass es unbeabsichtigerweise zu einem Verdampfen oder einem partiellen Verdampfen des flüssigen pharmazeutischen Produkts kommt. Denn eine solche Gasbildung könnte einerseits den Siegelvorgang beeinträchtigen und andererseits die Maßhaltigkeit des Innenquerschnitts des Applizierkanals erneut gefährden.

Wie an sich bekannt, ist es für die vorliegende Erfindung bevorzugt, den eigentlichen Tiefziehvorgang mittels Blasluft durchzuführen, d.h. die plastifizierten Bereiche der Tiefziehfolie mittels Blasluft in das Formwerkzeug umzuformen. Für die kritische Maßhaltigkeit des Applizierkanals einer Applikationsverpackung der vorliegenden Art hat es sich als vorteilhaft herausgestellt, wenn die Blasluft zumindest im Bereich des Applizierkanals erwärmt ist. Dies verbessert die Umformung der Tiefziehfolie in diesem Bereich und hat somit direkte Auswirkung auf die Maßhaltigkeit des Applizierkanals nach der Umformung.

Weiterhin hat es sich im Rahmen der vorliegenden Erfindung als günstig herausgestellt, wenn die Tiefziehfolie vor dem Tiefziehen mittels einer Kontaktheizung erwärmt wird, wobei im Wesentlichen nur diejenigen Bereiche der Tiefziehfolie zum Plastifizieren erwärmt werden, die beim Tiefziehen zum Ausformen der Kammer und des Applizierkanals vorgesehen sind. Die nicht hierzu gehörenden Bereiche der Tiefziehfolie werden bevorzugt also nicht plastifiziert, was einen positiven Effekt auf die Maßhaltigkeit insbesondere wiederum des Applizierkanals hat. Besonders bevorzugt ist es hierbei, wenn die Tiefziehfolie vor dem Tiefziehen von beiden Seiten erwärmt wird, wodurch sich eine besonders effiziente Plastifizierung für den Tiefziehvorgang ergibt.

Beim Hauptanwendungsgebiet der durch die vorliegenden Erfindung herzustellenden Applikationsverpackung, also dem Applizieren von Antiparasitika bei Haustieren, insbesondere bei Hunden und Katzen, gibt es das Problem, dass es gerade bei Hunden keine Dosiermenge gibt, die einheitlich für alle Arten von Hunden geeignet wäre. Es müssen vielmehr Applikationsverpackungen in unterschiedlichen Größen hergestellt werden, um die unterschiedlichen Anwendungsfälle abdecken zu können.

Um die Produktionskosten minimal zu halten, ist es im Rahmen der vorliegenden Erfindung bevorzugt, mit auswechselbaren Formwerkzeugen zu arbeiten. Diese auswechselbaren Formwerkzeuge sind als Tiefziehplatten mit Ausnehmungen ausgebildet, in welche die Tiefziehfolie hinein tiefgezogen wird. Diese Ausnehmungen werden in den auswechselbaren Formwerkzeugen unterschiedlich tief ausgebildet, so dass die Tiefziehfolie beim Tiefziehen Kammern mit unterschiedlichen Volumen bildet, ohne die sonstige Form der Applikationsverpackung zu ändern. Dementsprechend können alle anderen Teile der Produktionsanlage und deren Maschinenparameter unverändert beibehalten werden, es muss lediglich das als Tiefziehplatte ausgebildete Formwerkzeug sowie das Dosiervolumen für das einzufüllende flüssige pharmazeutische Produkt gewechselt bzw. geändert werden, um Applikationsverpackungen mit unterschiedlichen Kammervolumina herzustellen.

Als Tiefziehfolie wird im Rahmen der vorliegenden Erfindung vorzugsweise eine laminierte Verbundfolie verwendet, die eine Schicht aus Polypropylen (PP) und eine Schicht aus einem Acrylnitril-Methylacrylat-Copolymer (AMAB), vorzugsweise wie es unter der Marke Barex ® erhältlich ist, umfasst. Als Deckfolie wird vorzugsweise eine laminierte Verbundfolie verwendet, die eine Schicht aus Polyethylenterephtalat (PET) eine Schicht aus Aluminium und eine Schicht aus einem Acrylnitril-Methylacrylat-Copolymer (AMAB), wiederum bevorzugt eine Folie, die unter der Marke Barex ® erhältlich ist, umfasst. Mit solchen Tiefziehfolien und Deckfolien konnte die Anmelderin die besten Resultate erzielen, insbesondere wenn die Tiefziehfolie eine Stärke von etwa 200 µm PP und etwa 350 µm AMAB, und insbesondere wenn die Deckfolie eine Stärke von ca. 12 µm PET, von ca. 12 µm Aluminium und von ca. 35 µm AMAB aufweist, wobei diese Werte um ca. ± 10 % schwanken können.

Die Kontaktheizung zum Erwärmen der Tiefziehfolie in denjenigen Bereichen, die beim Tiefziehen zum Ausformen der Kammer und des Applizierkanals vorgesehen sind, ist für die Beheizung der Tiefziehfolie von oben und die Beheizung der Tiefziehfolie von unten vorzugsweise getrennt regelbar. Bei der Verwendung einer Tiefziehfolie, die aus Polypropylen und aus AMAB besteht, ist dies zur Erzielung einer Maßhaltigkeit - insbesondere beim in dieser Hinsicht kritischen Applizierkanal - vorteilhaft, denn der Temperaturbereich, in dem das Material der Tiefziehfolie plastifiziert wird, liegt bei AMAB typischerweise um die 80°C, während er bei Polypropylen typischerweise um die 150°C liegt.

Die tiefgezogene, befüllte und mit der Deckfolie verschlossene Tiefziehfolie wird bevorzugt ausgestanzt, um die Applikationsverpackung fertigzustellen. Hierbei ist es im Rahmen der vorliegenden Erfindung besonders vorteilhaft, wenn die mit der Deckfolie verbundene, befüllte Tiefziehfolie nach dem thermischen Ringsiegeln und vor dem Ausstanzen gekühlt wird. Dies ist insbesondere wegen der besonders langen Ausführung des kanülenartigen Applizierkanals der vorliegenden Applikationsverpackung vorteilhaft; denn das Kühlen verhindert ein Verziehen des Applizierkanals beim Ausstanzen und gewährleistet die notwendige hohe Maßhaltigkeit des Applizierkanals.

Wie an sich bekannt, können auch im Rahmen der vorliegenden Erfindung mehrere Applikationsverpackungen gleichzeitig in ein und derselben Tiefziehfolie tiefgezogen und in einem Arbeitsgang mit der Deckfolie verschlossen werden. Die Vereinzelung erfolgt dann durch das Ausstanzen der einzelnen Applikationsverpackungen.

Um die fertige Applikationsverpackung zur Anwendung des darin bereitgehaltenen flüssigen pharmazeutischen Produkts öffnen zu können, ist der Applizierkanal vorzugsweise in einem Endbereich, der seiner Mündung in die Kammer der Applikationsverpackung gegenüberliegt, mit einer Sollbruchstelle versehen, um eine abbrechbare oder leicht und reproduzierbar abschneidbare Spitze zu bilden. Die Sollbruchstelle kann eine Ritzung oder eine Rillung der Tiefziehfolie, oder auch eine Einschnürung sein; wichtig ist, dass eine Materialschwächung an der Sollbruchstelle vorgesehen ist, um den Applizierkanal abknicken und so die Applikationsverpackung öffnen zu können.

Vorzugsweise erfolgt die Herstellung einer Sollbruchstelle als Ritzung noch vor dem Plastifizieren und Tiefziehen der Tiefziehfolie. Hierbei wird beispielsweise bei einer Verbundfolie die Außenschicht durchschnitten und gegebenenfalls eine darunterliegende Schicht angeritzt. Wenn die Tiefziehfolie aus einer Schicht aus PP und einer Schicht aus AMAB besteht, kann beispielsweise die PP-Schicht durchschnitten und die AMAB-Schicht angeritzt werden.

Gerade dann, wenn eine Sollbruchstelle im Endbereich des Applizierkanals vorgesehen ist, ist eine Maßhaltigkeit desselben sowohl in seinem Außendurchmesser als auch in seinem Innendurchmesser sowie eine Maßhaltigkeit in der umlaufenden Dicke des Applizierkanals unumgänglich, denn wenn der Applizierkanal an dieser Sollbruchstelle nicht sehr exakt maßhaltig ist, kann er an dieser Stelle undicht werden, oder die beim Abbrechen entstehende Öffnung wird für die gewünschte Funktionsweise zu groß bzw. entsteht nicht in der gewollten Form und Dimension.

Die ausgestanzte Applikationsverpackung kann im Rahmen der vorliegenden Erfindung in eine als Blisterverpackung ausgestaltete Sekundärverpackung verpackt werden, wobei diese vorzugsweise aus laminierten Verbundfolien hergestellt wird, die eine Schicht aus Polyethylenterephthalat (PET), eine Schicht aus Polypropylen (PP) und/oder eine Schicht aus Polyethylen (PE) enthalten. Eine solche Sekundärverpackung bietet den Vorteil, die Applikationsverpackung vor Eindringen von Feuchtigkeit zu schützen und insbesondere die Formbeständigkeit der Pipette sowie vor allem von deren Applizierkanal während eines Transports und während des Vorhaltens zu gewährleisten.

Anhand der beigefügten Zeichnungen wird ein Ausführungsbeispiel für die Durchführung des erfindungsgemäßen Verfahrens näher beschrieben und erläutert. Es zeigen:
- Figur 1: eine Applikationsverpackung, die mit einem erfindungsgemäßen Verfahren hergestellt worden ist;
- Figur 2: eine schematische Darstellung der Herstellung der Applikationsverpackung aus Figur 1;
- Figur 3: eine schematische Draufsicht auf eine Heizplatte;
- Figur 4: eine schematische Draufsicht auf ein Formwerkzeug zum Tiefziehen;
- Figur 5: eine schematische Draufsicht auf eine Blasplatte für das Tiefziehen;
- Figur 6: die Applikationsverpackung aus Figur 1 in unterschiedlichen Größen;
- Figur 7: drei Applikationsverpackungen aus Figur 1, die in einer Sekundärverpackung eingepackt sind.

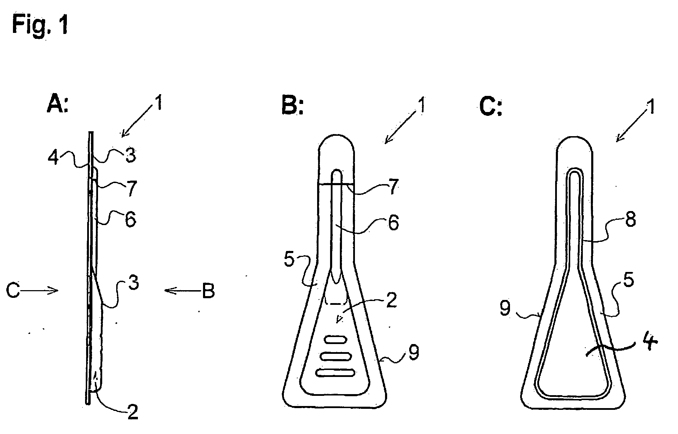

Die in Figur 1A in einer Seitenansicht, in Figur 1B in einer Ansicht von unten und in Figur 1C in einer Ansicht von oben dargestellte Applikationsverpackung 1 für ein Antiparasitikum in flüssiger Wirkstofflösung besteht aus einer Tiefziehfolie 3 und einer Deckfolie 4, wobei die Tiefziehfolie 3 als Formteil eine Kammer 2 für das flüssige pharmazeutische Produkt sowie einen in diese Kammer 2 mündenden, kanülenartigen Applizierkanal 6 bildet. Rund um die Kammer 2 und den Applizierkanal 6 läuft ein im Wesentlichen ebener Verbindungsbereich 5 der Tiefziehfolie 3 um. Die Deckfolie 4 deckt die Kammer 2 und den Applizierkanal 6 nach oben ab und ist im Verbindungsbereich 5 der Tiefziehfolie 3 mit dieser verbunden. Die Verbindung wurde durch thermisches Ringsiegeln hergestellt, so dass in der Draufsicht von oben (Figur 1 C) eine die Kammer 2 und den Applizierkanal 6 umgebende Ringsiegelung 8 erkennbar ist. Beim Siegeln der Deckfolie 4 auf der Tiefziehfolie 3 wurde der außerhalb der Ringsiegelung 8 befindliche Bereich 9 durch Strahlungswärme beaufschlagt, so dass die Deckfolie 4 auch dort an der Tiefziehfolie 3 anhaftet. Der Applizierkanal 6 ist schließlich in einem Endbereich mit einer Ritzung oder einer Rillung 7 versehen, die eine Sollbruchstelle bildet, an der die Spitze des Applizierkanals 6 abgebrochen werden kann, um die Applikationsverpackung 1 zur Anwendung zu öffnen.

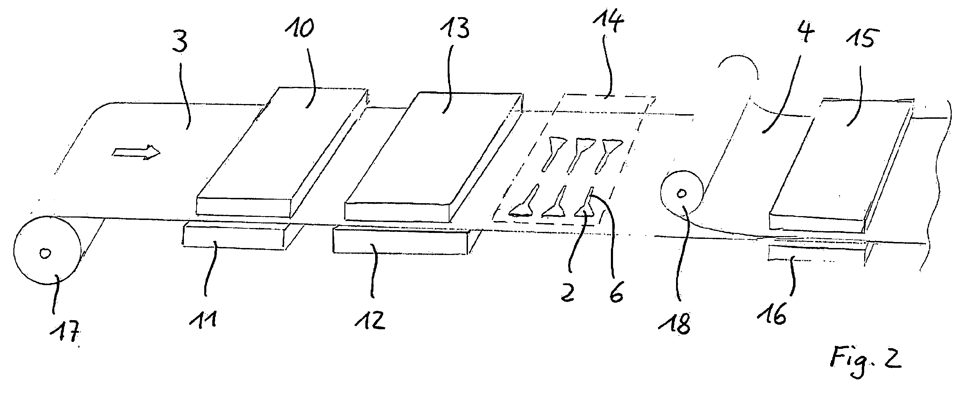

Figur 2 zeigt in einer schematischen Ansicht die wichtigsten Stationen zur Herstellung der in Figur 1 dargestellten Applikationsverpackung 1. Zunächst wird von einer ersten Rolle 17 die Tiefziehfolie 3 abgezogen und getaktet durch eine Heizstation mit einer oberen Heizplatte 10 und einer unteren Heizplatte 11 geführt. Dort wird die Tiefziehfolie 3 in denjenigen Bereichen, die später umgeformt werden sollen, bis zur Plastifizierung erwärmt. Die obere Heizplatte 10 und die untere Heizplatte 11 sind hierbei getrennt regelbar, um unterschiedliche Temperaturen für die Oberseite und die Unterseite der Tiefziehfolie 3 zu erzeugen. Denn die Tiefziehfolie 3 ist im vorliegenden Ausführungsbeispiel eine laminierte Verbundfolie mit einer Lage aus Polypropylen (PP) mit einer Stärke von ca. 200 µm und einer Lage aus Barex ® mit einer Stärke von ca. 350 µm. Da der Temperaturbereich, in dem die Barex ®-Schicht plastifiziert wird, typischerweise um die 80°C liegt, während der Temperaturbereich, in dem die Lage aus Polypropylen plastifiziert wird, typischerweise um die 150°C liegt, sind die oberen und unteren Heizplatten 10, 11 getrennt voneinander auf diese Temperaturbereiche eingestellt.

Anschließend an die Heizstation durchläuft die Tiefziehfolie 3 eine Tiefziehstation mit einem Formwerkzeug 12 und einer Blasplatte 13. Das Formwerkzeug 12 weist eine Mehrzahl von Ausnehmungen auf, in die die plastifizierten Bereiche der Tiefziehfolie 3 mit Hilfe von Blasluft aus der Blasplatte 13 und mit Hilfe einer Absaugung im Formwerkzeug 12 eingeformt bzw. tiefgezogen werden.

Das Ergebnis der Tiefziehstation liegt im nächsten Takt des Herstellungsverfahrens unter einer, hier nur mittels durchbrochener Linien angedeuteten Dosiervorrichtung 14, die das flüssige pharmazeutische Produkt in die Kammer 2 und den Applizierkanal 6, die in die Tiefziehfolie 3 eingeformt wurden, einfüllt.

Nach dem Befüllen der tiefgezogenen Bereiche der Tiefziehfolie 3 in der Dosiervorrichtung 14 wird von einer zweiten Rolle 18 die Deckfolie 4 abgezogen und auf die Tiefziehfolie 3 aufgelegt. In einer Siegelstation, gebildet durch eine Siegelplatte 15 und eine Gegenplatte 16, wird die Deckfolie 4 auf die Tiefziehfolie 3 aufgesiegelt, und zwar mittels einer thermischen Ringsiegelung.

Nach einem (hier nicht dargestellten) Stanzvorgang, in dem die einzelnen Applikationsverpackungen 1 ausgestanzt werden, liegt die Applikationsverpackung dann in der in Figur 1 dargestellten Form vor.

Ebenfalls in Figur 2 nicht dargestellt ist eine Vorrichtung zum Erzeugen der Ritzung oder Rillung 7 als Sollbruchstelle. Diese befindet sich noch stromaufwärts der oberen Heizplatte 10 und der unteren Heizplatte 11, da die Tiefziehfolie 3 noch vor dem Erwärmen in der Heizstation mit entsprechenden Ritzungen versehen wird, die später in der umgeformten Applikationsverpackung 1 die Sollbruchstelle im Applizierkanal 6 bildet. Hierfür werden die PP-Schicht durchtrennt und die Barex ® -Schicht geschwächt.

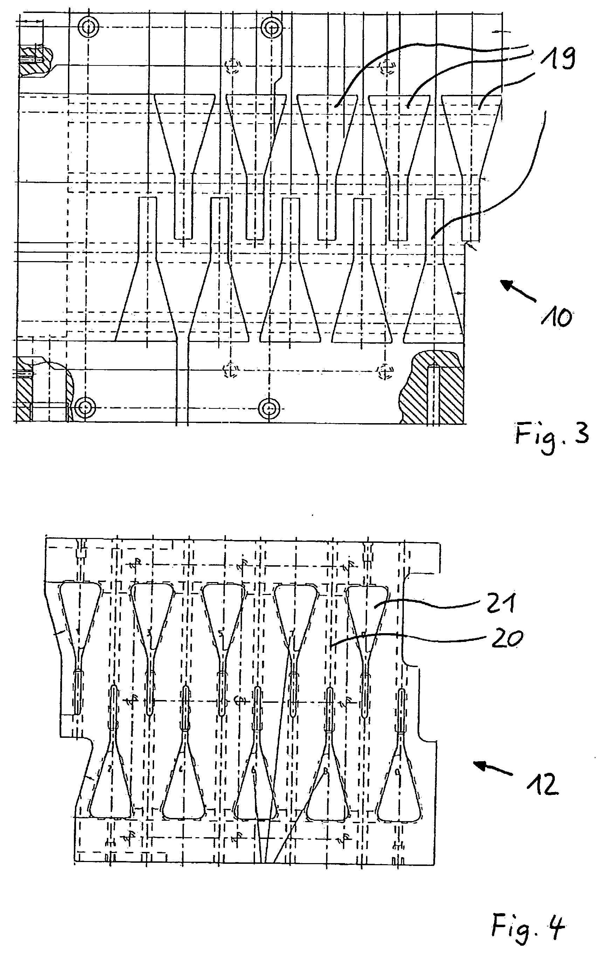

Figur 3 zeigt schematisch eine Draufsicht auf die obere Heizplatte 10 der in Figur 2 dargestellten Heizstation. Wie in Figur 3 angedeutet ist, ist die obere Heizplatte 10 mit einer Anzahl von Teilbereichen 19 ausgestattet, in denen die obere Heizplatte 10 in Kontakt mit der Tiefziehfolie 3 kommt. Die Tiefziehfolie 3 wird demnach mittels Kontaktheizung nur in denjenigen Teilbereichen 19 plastifiziert, die letztendlich in der Tiefziehstation umgeformt werden sollen. Die außerhalb der Teilbereiche 19 befindlichen Bereiche der Tiefziehfolie 3 werden nicht so weit erwärmt, dass sie plastifiziert werden.

Die Heizstation besteht aus der hier dargestellten oberen Heizplatte 10 und der beispielsweise in Figur 2 dargestellten unteren Heizplatte 11. Beide sind in der Ausbildung der Heizflächenkontur deckungsgleich ausgelegt, so dass in der Heizstation lediglich die zu verformenden Flächen der Tiefziehfolie 3 plastifiziert werden.

Figur 4 ist eine schematische Draufsicht auf das Formwerkzeug 12 zum Tiefziehen der Kammer 2 und des Applizierkanals 6 der Applikationsverpackung 1. Mit durchbrochenen Linien sind Entlüftungskanäle 20 angedeutet, die ermöglichen, dass die Tiefziehfolie 3 vollständig in Ausnehmungen 21 zur Ausformung der Kammer 2 und des Applizierkanals 6 eingeformt werden kann.

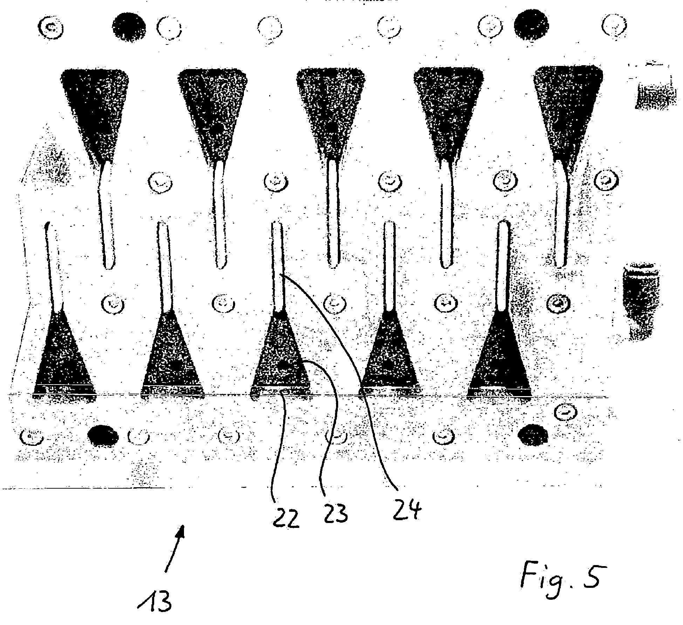

Das Gegenstück zum Formwerkzeug 12 zeigt Figur 5 in einer schematischen Draufsicht; es handelt sich um eine Blasplatte 13. In denjenigen Bereichen der Blasplatte 13, die über die in die Tiefziehfolie 3 einzuformenden Kammer 2 und Applizierkanal 6 zu liegen kommen, sind Überdruckräume 22 mit Blasöffnungen 23 erkennbar.

Gemäß der vorliegenden Erfindung ist die Blasplatte 13 außerdem mit Formstempeln 24 ausgestattet, die gegenüber der Blasplatte 13 bewegbar sind und aus dieser heraus bewegt werden können, um die Tiefziehfolie 3 in das Formwerkzeug 12 zu pressen und hierdurch vorzustrecken.

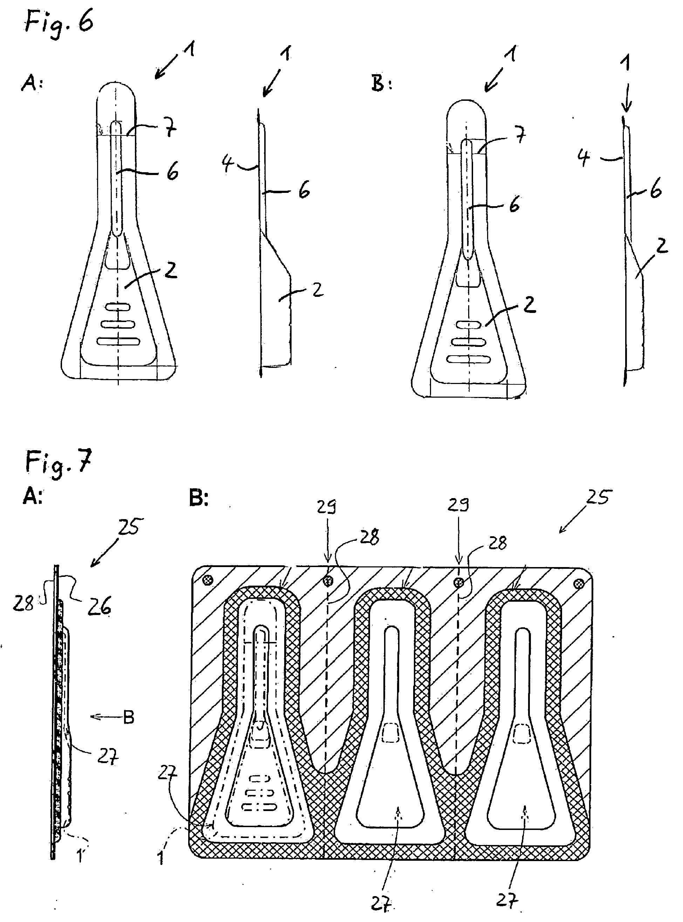

Die Figuren 6A und 6B zeigen Applikationsverpackungen 1 in verschiedenen Größen; die in Figur 6A dargestellte Applikationsverpackung ist mit einer größeren Menge von pharmazeutischer Wirkstofflösung befüllt als die in Figur 6 B dargestellte Applikationsverpackung 1, beispielsweise zur Anwendung eines Antiparasitikums für große und kleine Hunde.

Wie deutlich erkennbar ist, sind die beiden Applikationsverpackungen 1 in den Figuren 6A und 6B in der Draufsicht nicht unterscheidbar; lediglich in der Seitenansicht wird deutlich, dass die Kammer 2 unterschiedliche Volumina aufweist. Dies wird gemäß der vorliegenden Erfindung dadurch erzielt, dass austauschbare Formwerkzeuge 12 verwendet werden, die gegebenenfalls zu einer Kammer 2 mit verkleinertem Volumen führen, die in Figur 6B dargestellt ist, oder zu einer Kammer 2 mit größerem Volumen, wie sie in Figur 6A dargestellt ist. Weitere Veränderungen, außer bei der Dosiervorrichtung 14, müssen in der Anlage, die das erfindungsgemäße Verfahren durchführt, nicht vorgenommen werden, um die hier dargestellten unterschiedlichen Größen der Applikationsverpackung 1 herzustellen.

Figur 7 zeigt schließlich in einer Seitenansicht und einer Draufsicht eine Verkaufseinheit mit drei Applikationsverpackungen 1, die in einer als Blisterverpackung ausgestalteten Sekundärverpackung 25 verpackt sind. Diese Sekundärverpackung besteht aus einer Blisterziehfolie 26 mit drei Blisteraufnahmebereichen 27 für die Applikationsverpackungen 1. Die Blisteraufnahmebereiche 27 sind mit einer peelbaren Blisterdeckfolie 28 verschlossen.

Die Blistertiefziehfolie 26 besteht vorliegend aus einem PET/PP/PE-Laminat mit einer Stärke von 350/100/75 µm. Die peelbare Blisterdeckfolie 28 besteht aus einem PET/AI/PE-Laminat mit einer Stärke von 12/12/50 µm.

Zwischen den drei Blisteraufnahmebereichen 27 weist die Sekundärverpackung 25 Perforationen 28 auf, an denen die einzelnen Blisteraufnahmebereiche 27 mit den darin enthaltenen Applikationsverpackungen 1 abgetrennt werden können. Um ein Abreißen der einzelnen Applikationsverpackungen 1 von Hand zu ermöglichen, ist die Sekundärverpackung 25 mit aufreißbaren Vorschnitten 29 versehen. Zum Entnehmen einer Applikationsverpackung 1 wird die Blisterdeckfolie 28 einfach von Hand von der Blisterziehfolie 26 abgezogen.

## Patentansprüche

1. Verfahren zum Herstellen und Befüllen einer Applikationsverpackung (1) für ein flüssiges pharmazeutisches Produkt, mit den Verfahrensschritten:
- Erwärmen einer Tiefziehfolie (3) aus miteinander laminierten thermoplastischen Kunststoffen, um die Tiefziehfolie (3) zumindest in Teilbereichen (19) zu plastifizieren,
- Tiefziehen von plastifizierten Bereichen der Tiefziehfolie (3) in ein Formwerkzeug (12) zur Ausformung einer Kammer (2) für das flüssige pharmazeutische Produkt und einem in diese Kammer (2) mündenden, kanülenartigen Applizierkanal (6), wobei die Kammer (2) und der Applizierkanal (6) rundum von einem nicht tiefgezogenen, im Wesentlichen ebenen Verbindungsbereich (5) der Tiefziehfolie (3) umgeben sind,
- Einfüllen des flüssigen pharmazeutischen Produkts in die Kammer (2) der tiefgezogenen Tiefziehfolie (3),
- Abdecken der tiefgezogenen und befüllten Tiefziehfolie (3) mit einer im Wesentlichen ebenen Deckfolie (4), um die Kammer (2) und den Applizierkanal (6) zu verschließen,
- Festlegen der Deckfolie (4) an dem die Kammer (2) und den Applizierkanal (6) umgebenden Verbindungsbereich (5) der Tiefziehfolie (3),
**dadurch gekennzeichnet,**
**dass** die Tiefziehfolie (3) beim Tiefziehen zumindest in einem Teilbereich des Applizierkanals (6) mit einem Formstempel (24) in das Formwerkzeug (12) gepresst wird, und zwar in einem solcherart thermisch plastifizierten Zustand, dass die Tiefziehfolie (3) hierbei zwischen dem Formstempel (24) und dem Formwerkzeug (12) kalibriert wird, um die Maßhaltigkeit des Applizierkanals (6) der hergestellten Applikationsverpackung (1) zu gewährleisten.

2. Verfahren nach Anspruch 1,
**dadurch gekennzeichnet,**
**dass** die Deckfolie (4) mittels einer thermischen Ringsiegelung (8) mit dem Verbindungsbereich (5) der tiefgezogenen und befüllten Tiefziehfolie (3) stoffschlüssig verbunden wird.

3. Verfahren nach Anspruch 2,
**dadurch gekennzeichnet,**
**dass** für die thermische Ringsiegelung (8) ein im Verbindungsbereich (5) auf die Deckfolie (4) aufgesetztes plattenförmiges Siegelwerkzeug (15) mit einem ringförmigen, über eine Auflageebene des Siegelwerkzeugs (15) vorstehenden, beheizten Ringsteg verwendet wird.

4. Verfahren nach Anspruch 3,
**dadurch gekennzeichnet,**
**dass** die Tiefziehfolie (3) und/oder die Deckfolie (4) bei der thermischen Ringsiegelung (8) in einem außen neben dem Ringsteg befindlichen Bereich (9) mit Strahlungswärme beaufschlagt werden, so dass die Tiefziehfolie (3) und die Deckfolie (4) im Wesentlichen im gesamten, außerhalb der Ringsiegelung (8) liegenden Verbindungsbereich (5) aneinander haften.

5. Verfahren nach mindestens einem der Ansprüche 2 bis 4,
**dadurch gekennzeichnet,**
**dass** ein Siegelwerkzeug (15) verwendet wird, das innerhalb des Ringstegs, zumindest in einem Bereich, der bei der thermischen Ringsiegelung über der Kammer (2) und dem Applizierkanal (6) zu liegen kommt, mit einem thermisch isolierenden Material versehen ist.

6. Verfahren nach mindestens einem der Ansprüche 1 bis 5,
**dadurch gekennzeichnet,**
**dass** die plastifizierten Bereiche der Tiefziehfolie(3) mittels Blasluft in das Formwerkzeug (12) tiefgezogen werden, wobei die Blasluft zumindest im Bereich des Applizierkanals (6) erwärmt wird.

7. Verfahren nach mindestens einem der Ansprüche 1 bis 6,
**dadurch gekennzeichnet,**
**dass** die Tiefziehfolie (3) vor dem Tiefziehen mittels einer Kontaktheizung (10, 11) erwärmt wird, wobei im Wesentlichen nur diejenigen Bereiche (19) der Tiefziehfolie (3) zum Plastifizieren erwärmt werden, die beim Tiefziehen zum Ausformen der Kammer (2) und des Applizierkanals (6) vorgesehen sind.

8. Verfahren nach Anspruch 7,
**dadurch gekennzeichnet,**
**dass** die Tiefziehfolie (3) vor dem Tiefziehen von beiden Seiten erwärmt wird.

9. Verfahren nach mindestens einem der Ansprüche 1 bis 8,
**dadurch gekennzeichnet,**
**dass** austauschbare Formwerkzeuge (12) verwendet werden, um das Volumen der Kammer (2), die beim Tiefziehen der Tiefziehfolie (3) entsteht, bedarfsweise zu verändern.

10. Verfahren nach mindestens einem der Ansprüche 1 bis 9,
**dadurch gekennzeichnet,**
**dass** als Tiefziehfolie (3) eine laminierte Verbundfolie verwendet wird, die eine Schicht aus Polypropylen (PP) und eine Schicht aus einem Acrylnitril-Methylacrylat-Copolymer (AMAB) umfasst.

11. Verfahren nach mindestens einem der Ansprüche 1 bis 10,
**dadurch gekennzeichnet,**
**dass** als Deckfolie (4) eine laminierte Verbundfolie verwendet wird, die eine Schicht aus Polyethylenterephtalat (PET), eine Schicht aus Aluminium und eine Schicht aus einem Acrylnitril-Methylacrylat-Copolymer (AMAB) umfasst.

12. Verfahren nach mindestens einem der Ansprüche 1 bis 11,
**dadurch gekennzeichnet,**
**dass** mehrere Applikationsverpackungen (1) gleichzeitig in ein und derselben Tiefziehfolie (3) tiefgezogen und in einem Arbeitsgang mit der Deckfolie (4) verschlossen werden, und dass die tiefgezogenen, befüllten und mit der Deckfolie (4) verschlossenen Bereiche der Tiefziehfolie (3) ausgestanzt werden, um die Applikationsverpackungen (1) fertigzustellen.

13. Verfahren nach Anspruch 12,
**dadurch gekennzeichnet,**
**dass** die tiefgezogene, befüllte und mit der Deckfolie (4) verbundene Tiefziehfolie (3) nach dem thermischen Ringsiegeln und vor dem Ausstanzen gekühlt wird.

14. Verfahren nach mindestens einem der Ansprüche 1 bis 13,
**dadurch gekennzeichnet,**
**dass** der Applizierkanal (6) in einem Endbereich mit einer Sollbruchstelle (7) versehen wird, um eine abbrechbare oder abschneidbare Spitze zu bilden.

15. Verfahren nach mindestens einem der Ansprüche 1 bis 14,
**dadurch gekennzeichnet,**
**dass** die ausgestanzte Applikationsverpackung (1) in eine als Blisterverpackung ausgestaltete Sekundärverpackung verpackt wird.

16. Verfahren nach Anspruch 15,
**dadurch gekennzeichnet,**
**dass** eine Sekundärverpackung aus laminierten Verbundfolien verwendet wird, die eine Schicht aus Polyethylenterephtalat (PET), eine Schicht aus Polypropylen (PP) und/oder eine Schicht aus Polyethylen (PE) enthält.

## Claims

1. Process for the production and filling of an administration packaging (1) for a liquid pharmaceutical product, having the process steps:
- heating a deep-drawing film (3) composed of thermoplastic plastics materials that are laminated to one another, in order to plasticise the deep-drawing film (3) at least in sub-regions (19),
- deep-drawing plasticised regions of the deep-drawing film (3) into a moulding tool (12) to form a chamber (2) for the liquid pharmaceutical product and a cannula-like administration channel (6) opening into that chamber (2), the chamber (2) and the administration channel (6) being completely surrounded by a non-deep-drawn, substantially flat connection region (5) of the deep-drawing film (3),
- introducing the liquid pharmaceutical product into the chamber (2) of the deep-drawn deep-drawing film (3),
- covering the deep-drawn and filled deep-drawing film (3) with a substantially flat cover film (4) in order to close the chamber (2) and the administration channel (6),
- fixing the cover film (4) to the connection region (5) of the deep-drawing film (3) surrounding the chamber (2) and the administration channel (6),
**characterised in that**
during the deep-drawing, the deep-drawing film (3) is pressed into the moulding tool (12) with a moulding die (24), at least in a sub-region of the administration channel (6), this being effected in a thermally plasticised state such that on so doing the deep-drawing film (3) is calibrated between the moulding die (24) and the moulding tool (12) in order to ensure the dimensional accuracy of the administration channel (6) of the administration packaging (1) produced.

2. Process according to claim 1,
**characterised in that**
the cover film (4) is bonded to the connection region (5) of the deep-drawn and filled deep-drawing film (3) by means of thermal ring-sealing (8).

3. Process according to claim 2,
**characterised in that**
for the thermal ring-sealing (8) there is used a plate-shaped sealing tool (15) having a ring-shaped, heated ring rib which projects beyond an application plane of the sealing tool (15), which sealing tool is applied to the cover film (4) in the connection region (5).

4. Process according to claim 3,
**characterised in that**
during the thermal ring-sealing (8), the deep-drawing film (3) and/or the cover film (4) are acted upon with radiant heat in a region (9) located outside next to the ring rib, so that the deep-drawing film (3) and the cover film (4) adhere to one another substantially in the entire connection region (5) located outside the ring seal (8).

5. Process according to at least one of claims 2 to 4,
**characterised in that**
a sealing tool (15) is used which is provided with a thermally insulating material inside the ring rib, at least in a region which, during the thermal ring-sealing, comes to rest over the chamber (2) and the administration channel (6).

6. Process according to at least one of claims 1 to 5,
**characterised in that**
the plasticised regions of the deep-drawing film (3) are deep-drawn into the moulding tool (12) by means of blown air, the blown air being heated at least in the region of the administration channel (6).

7. Process according to at least one of claims 1 to 6,
**characterised in that**
prior to the deep-drawing, the deep-drawing film (3) is heated by means of a contact heater (10, 11), there being heated for plasticisation substantially only those regions (19) of the deep-drawing film (3) which are intended to form the chamber (2) and the administration channel (6) during the deep-drawing.

8. Process according to claim 7,
**characterised in that**
prior to the deep-drawing, the deep-drawing film (3) is heated from both sides.

9. Process according to at least one of claims 1 to 8,
**characterised in that**
exchangeable moulding tools (12) are used in order that the volume of the chamber (2) formed during the deep-drawing of the deep-drawing film (3) can be altered as required.

10. Process according to at least one of claims 1 to 9,
**characterised in that**
as deep-drawing film (3) there is used a laminated composite film which comprises a layer of polypropylene (PP) and a layer of an acrylonitrile/methyl acrylate copolymer (AMAB).

11. Process according to at least one of claims 1 to 10,
**characterised in that**
as cover film (4) there is used a laminated composite film which comprises a layer of polyethylene terephthalate (PET), a layer of aluminium and a layer of an acrylonitrile/methyl acrylate copolymer (AMAB).

12. Process according to at least one of claims 1 to 11,
**characterised in that**
a plurality of administration packagings (1) are deep-drawn simultaneously in the same deep-drawing film (3) and are closed with the cover film (4) in one operation, and the regions of the deep-drawing film (3) that have been deep-drawn, filled and closed with the cover film (4) are stamped out in order to make the administration packagings (1).

13. Process according to claim 12,
**characterised in that**
the deep-drawing film (3) that has been deep-drawn, filled and joined to the cover film (4) is cooled after the thermal ring-sealing and before the stamping-out.

14. Process according to at least one of claims 1 to 13,
**characterised in that**
the administration channel (6) is provided with a predetermined breaking point (7) in an end region in order to form a point that can be broken off or cut off.

15. Process according to at least one of claims 1 to 14,
**characterised in that**
the stamped-out administration packaging (1) is packaged in a secondary packaging configured as a blister packaging.

16. Process according to claim 15,
**characterised in that**
a secondary packaging composed of laminated composite films is used which contains a layer of polyethylene terephthalate (PET), a layer of polypropylene (PP) and/or a layer of polyethylene (PE).

## Revendications

1. Procédé de fabrication et de remplissage d'un conditionnement d'application (1) pour un produit pharmaceutique liquide, avec les étapes de procédé suivantes :
- échauffement d'un film à emboutir (3) constitué de matières thermoplastiques stratifiées ensemble, afin de plastifier le film à emboutir (3) au moins dans des régions partielles (19),
- emboutissage des régions plastifiées du film à emboutir (3) dans un outil de formage (12) afin de former une chambre (2) pour le produit pharmaceutique liquide et un canal d'application (6) débouchant dans cette chambre (2), sachant que la chambre (2) et le canal d'application (6) sont entourés tout autour par une région de liaison (5) essentiellement plane, non emboutie, du film à emboutir (3),
- remplissage du produit pharmaceutique liquide dans la chambre (2) du film à emboutir (3) embouti,
- recouvrement du film à emboutir (3) embouti et rempli par un film de recouvrement (4) essentiellement plan, afin de fermer la chambre (2) et le canal d'application (6),
- fixation en position du film de recouvrement (4) sur la région de liaison (5) du film à emboutir (3) qui entoure la chambre (2) et le canal d'application (6),
**caractérisé en ce que** le film à emboutir (3) est, lors de l'emboutissage, pressé dans l'outil de formage (12) par un poinçon de formage (24) au moins dans une région partielle du canal d'application (6), et ce dans un état thermiquement plastifié tel que le film à emboutir (3) est alors calibré entre le poinçon de formage (24) et l'outil de formage (12), afin de garantir l'exactitude des cotes du canal d'application (6) du conditionnement d'application (1) fabriqué.

2. Procédé selon la revendication 1, **caractérisé en ce que** le film de recouvrement (4) est assemblé par liaison de matière au moyen d'un scellement annulaire thermique (8) à la région de liaison (5) du film à emboutir (3) embouti et rempli.

3. Procédé selon la revendication 2, **caractérisé en ce qu'**on utilise pour le scellement annulaire thermique (8) un outil de scellement (15) en forme de plaque, posé sur le film de recouvrement (4) dans la région de liaison (5) et doté d'une saillie annulaire chauffée, dépassant d'un plan de pose de l'outil de scellement (15).

4. Procédé selon la revendication 3, **caractérisé en ce que** le film à emboutir (3) et/ou le film de recouvrement (4) sont, lors du scellement annulaire thermique (8), sollicités par de la chaleur rayonnante dans une région (9) située extérieurement en dehors de la saillie annulaire, de sorte que le film à emboutir (3) et le film de recouvrement (4) adhérent l'un à l'autre sensiblement dans toute la région de liaison (5), située à l'extérieur du scellement annulaire (8).

5. Procédé selon au moins une des revendications 2 à 4, **caractérisé en ce qu'**on utilise un outil de scellement (15) qui est pourvu, à l'intérieur de la saillie annulaire, au moins dans une région qui vient se placer au-dessus de la chambre (2) et du canal d'application (6) lors du scellement annulaire thermique, d'un matériau thermiquement isolant.

6. Procédé selon au moins une des revendications 1 à 5, **caractérisé en ce que** les régions plastifiées du film à emboutir (3) sont embouties au moyen d'air de soufflage dans l'outil de formage (12), sachant que l'air de soufflage est échauffé au moins dans la région du canal d'application (6).

7. Procédé selon au moins une des revendications 1 à 6, **caractérisé en ce que** le film à emboutir (3) est échauffé avant l'emboutissage au moyen d'un chauffage par contact (10, 11), sachant que, pour l'essentiel, seules sont échauffées afin d'être plastifiées les régions (19) du film à emboutir (3) qui sont prévues pour le formage de la chambre (2) et du canal d'application (6) lors de l'emboutissage.

8. Procédé selon la revendication 7, **caractérisé en ce que** le film à emboutir (3) est échauffé des deux côtés avant l'emboutissage.

9. Procédé selon au moins une des revendications 1 à 8, **caractérisé en ce qu'**on utilise des outils de formage (12) interchangeables, afin de modifier en cas de besoin le volume de la chambre (2) qui est créée lors de l'emboutissage du film à emboutir (3).

10. Procédé selon au moins une des revendications 1 à 9, **caractérisé en ce qu'**on utilise comme film à emboutir (3) un film composite stratifié qui comprend une couche de polypropylène (PP) et une couche d'un copolymère acrylonitrile-acrylate de méthyle (AMAB).

11. Procédé selon au moins une des revendications 1 à 10, **caractérisé en ce qu'**on utilise comme film de recouvrement (4) un film composite stratifié qui comprend une couche de polyéthylène-téréphtalate (PET), une couche d'aluminium et une couche d'un copolymère acrylonitrile-acrylate de méthyle (AMAB).

12. Procédé selon au moins une des revendications 1 à 11, **caractérisé en ce que** plusieurs conditionnements d'application (1) sont simultanément emboutis dans un seul et même film à emboutir (3) et sont fermés en une opération par le film de recouvrement (4), et **en ce que** les régions du film à emboutir (3) embouties, remplies et fermées par le film de recouvrement (4) sont découpées afin d'achever les conditionnements d'application (1).

13. Procédé selon la revendication 12, **caractérisé en ce que** le film à emboutir (3) embouti, rempli et assemblé au film de recouvrement (4) est refroidi après le scellement annulaire thermique et avant le découpage.

14. Procédé selon au moins une des revendications 1 à 13, **caractérisé en ce que** le canal d'application (6) est pourvu dans une région terminale d'une zone (7) destinée à la rupture, afin de former une pointe pouvant être brisée ou coupée.

15. Procédé selon au moins une des revendications 1 à 14, **caractérisé en ce que** le conditionnement d'application (1) découpé est emballé dans un conditionnement secondaire réalisé sous forme d'emballage du type blister.

16. Procédé selon la revendication 15, **caractérisé en ce qu'**on utilise un conditionnement secondaire constitué de films composites stratifiés, qui comprend une couche de polyéthylène-téréphtalate (PET), une couche de polypropylène (PP) et/ou une couche de polyéthylène (PE).
